# EUROPEAN PATENT APPLICATION

(11) **EP 2 272 655 A1**
(43) Date of publication of application: **12.01.2011**
(21) Application number: 08761572.0
(22) Date of filing: 08.05.2008
(51) Int. Cl.: B29C 70/50, B29D 31/00

(54) **EQUIPMENT AND METHOD FOR PRODUCING PROFILE SECTIONS MADE FROM COMPOSITE MATERIAL AND PROFILE SECTION RESULTING FROM SAID METHOD**

(71) Applicant: Applus Servicios Tecnologicos, S.l., 08193 Bellaterra (Barcelona) (ES)
(72) Inventor: BRUFAU REDONDO, Jordi, E-08193 Bellaterra (Barcelona) (ES)
(74) Representative: Carpintero Lopez, Francisco
(86) International application number: PCT/ES2008/000327
(87) International publication number: WO 2009/135962

(57) **Abstract**

The invention relates to equipment and method for obtaining profile sections made from composite material and profile section obtained by means of said method, comprising at least one shaping station configured to continuously shape a basic profile section (1) that is initially planar on a rigid longitudinally non-straight guiding element (2) to obtain a final longitudinally non-straight profile section made from composite material, comprising at least one portion (3) that is offset by means of the longitudinal and progressive insertion in the basic profile section (1) of the guiding element (2), as a consequence of the passage of said basic profile section (1) and said guiding element (2) through the shaping station.

## Description

### Object of the Invention

A first aspect of the present invention relates to equipment for obtaining profile sections made from composite material, a second aspect relates to a method for obtaining said profile sections and a third aspect relates to a profile section obtained by means of said method, having an application in the industry for manufacturing profile sections made from composite material of fiber reinforced thermoplastic or thermosetting matrixes, for the special use thereof in the aeronautics industry for the purpose of increasing the rigidity of the panels used in aircrafts.

### Background of the Invention

The use of profile sections made from a composite material of thermoplastic or thermosetting matrixes, hereinafter referred to by its abbreviation FRP (Fiber Reinforced Plastics) as structural profile sections commonly used to increase the rigidity of panels in the aeronautics industry is known today, said profile sections being known as stringers.

There is a wide range of industrial processes used today to obtain these profile sections and they comprise different steps, as well as the use of different equipment, depending on the configuration of the profile section to be shaped, the most commonly used profile sections being those having a cross section or configuration in the shape of a T, I, Ω, L, U, J and Z, among others. Each profile section has a different shaping process, including different steps or basic operations, such as for example bending, gluing, pressing and a series of final finishing operations.

Generally all these shaping processes for obtaining this type of profile section are not automated given the complexity of the profile section that is to be obtained, the need to include manual operations being common, which increases the production times as well as the associated costs, in addition to needing to have skilled and experienced technical personnel to perform said manual operations.

An example of the aforementioned processes is described in international patent application PCT no. WO-2007/023197-A1, which describes a process for manufacturing stringers made from composite material to stiffen panels made from composite material, which comprises obtaining a planar laminate made from composite material, folding said planar laminate according to the desired final shape for the stringer, to then immediately introduce the reinforcement, ending the process by giving the final shape to the stringer.

On the other hand, US patent application no. US-2004/0265536-A1 describes a method and apparatus for shaping a stringer made from composite material, comprising the use of different sequential pressing steps for fitting out a cavity or gap that allows introducing a reinforcing material, to finally shape the stringer made from composite material, again by means of the use of pressing equipment.

All these processes relate to shaping operations for obtaining similar sections of profile sections made from composite material, having all the aforementioned drawbacks.

### Description of the Invention

A first aspect of the present invention relates to equipment for obtaining profile sections made from composite material, preferably made from composite material of thermoplastic or thermosetting matrixes, FRP, having a special application as structural profile sections for reinforcing and increasing the rigidity of panels in the aeronautics industry.

The equipment proposed by the invention comprises at least one shaping station configured to at least partially continuously shape a basic profile section that is initially planar on a guiding element or rigid longitudinally non-straight reinforcement, or blade, to obtain a final longitudinally non-straight profile section made from composite material according to the shape of the guiding element.

Given that the guiding element is not straight, the final profile section comprises at least one portion that is offset, i.e., a change of height or direction of the neutral fiber throughout the profile section, all by means of the longitudinal and progressive insertion in the basic profile section of the guiding element, as a consequence of the passage of said basic profile section and said guiding element through said shaping station.

The equipment of the invention contemplates shaping profile sections having different sections, including cross sections or configurations in the shape of a T, I, Ω, L, U, J and Z, among others, by means of continuously inserting a guiding element which allows achieving changes of direction or inflections in the neutral fiber of the profile section obtained. According to a preferred embodiment, the basic profile sections are made from FRP materials, whereas the guiding elements can be made from the same material as the basic profile sections or from any other material compatible with the FRP material of the basic profile sections.

The equipment of the invention allows achieving changes in the direction of the profile section, either in height or in a perpendicular direction, called joggles, the function thereof being to get the profile section to adapt to the geometric changes of the surface of the panel to be reinforced, allowing increases or reductions of the height of the profile section in order to increase or reduce the rigidity of the panel in those areas in which it is necessary.

By contemplating a continuous shaping process, the equipment allows achieving a high production rate and therefore allows reducing production costs.

The possibility that the equipment comprises traction means configured so that the longitudinal advance movement of the basic profile section is in solidarity with the longitudinal advance movement of the guiding element is contemplated.

The invention contemplates the equipment comprising any variation with regard to the drive elements, i.e., with regard to the relative movement between the shaping station and the profile section to be shaped, being able to mention by way of example that the invention contemplates the shaping station comprising free-floating roller stations located in a fixed bed plate, the profile section to be shaped being shifted by means of a mobile bed plate. It is also contemplated that the profile section to be shaped is located in a fixed bed plate, whereas the roller stations are shifted with respect to said profile section to be shaped.

It is also contemplated that the roller stations have a free-floating arrangement, being configured to shift vertically and laterally, in solidarity through the stations, and to produce the portions that are offset throughout the final profile section.

On the other hand, it is contemplated that the equipment comprises vibrating means configured to transmit a vibratory movement to the basic profile section during shaping, such that it improves the adaptability thereof, i.e., such that the adaptation between said basic profile section and said guiding element during shaping is complete.

A second aspect of the invention relates to a method for obtaining profile sections made from composite material, comprising at least partially continuously shaping a basic profile section that is initially planar on a rigid longitudinally non-straight guiding element, to obtain a final longitudinally non-straight profile section made from composite material, comprising at least one portion that is offset by means of the longitudinal and progressive insertion in the basic profile section of said guiding element while it is being shaped.

The method of the invention contemplates performing any shaping process, such as processes of pultrusion, shaping with shaping gear or rollers, or any other continuous shaping process, using the rigid guiding element to obtain a final shape in the profile section obtained.

The method of the invention contemplates shaping profile sections having different sections by means of continuously inserting a guiding element which allows achieving changes of direction or inflections in the neutral fiber of the profile section obtained. According to a preferred embodiment, the basic profile sections are made from FRP materials, whereas the guiding elements can be made from the same material as the basic profile sections or from any other material compatible with the FRP material of the basic profile sections.

The method allows achieving changes in the direction of the profile section, either in height or a perpendicular direction, so that the profile section adapts to the geometric changes of the surface of the panel to be reinforced, allowing increases or reductions of the height of the profile section in order to increase or reduce the rigidity of the panel in those areas in which it is necessary. Given the continuous nature of the method of the invention, a high production rate is achieved and production costs are therefore reduced.

The possibility that the method comprises driving the basic profile section and the guiding element such that the longitudinal advance movement of the basic profile section is in solidarity with the longitudinal advance movement of the guiding element is contemplated. Using equipment such as that described above is contemplated to carry out the method of the invention.

It is also contemplated that the method comprises extracting the guiding element from the basic profile section after said basic profile section has been shaped on said guiding element, such that the final profile section has the geometry of the guiding element, once said guiding element, which in this case has a mold function during the shaping of the basic profile section to be obtained, has been extracted.

On the other hand, it is contemplated that the method comprises transmitting a vibratory movement to the guiding element during the shaping of the basic profile section on said guiding element, such that the adaptation between said basic profile section and said guiding element during shaping is complete, improving the adaptation between both.

A third aspect of the invention relates to a profile section made from composite material, comprising a basic profile section which is shaped on a rigid non-straight guiding element. The invention contemplates that the guiding element is extracted from the final profile section, such that said final profile section has the geometry of the guiding element without having said guiding element.

According to a preferred embodiment of the invention, the basic profile section is a composite material with a matrix selected from at least one thermoplastic material, at least one thermosetting material and any combination thereof, reinforced with fibers, i.e., it is made from FRP materials, whereas the guiding element can be made from the same material as the basic profile section or from any other material compatible with the FRP material of the basic profile section. Also, according to said preferred embodiment the profile section made from composite material proposed by the invention is obtained by means of the previously described method and equipment.

Therefore, according to the described invention, the equipment and the method for obtaining profile sections made from composite material, as well as the profile section obtained, proposed by the invention are an advance in the means used up until now and solve in a fully satisfactory manner the previously described drawbacks in the line of allowing automation of the production process for this type of profile section, as well as a reduction of production times and costs, which allows obtaining non-straight guiding profile sections having any shape and configuration, simultaneously including several basic operations, such as shaping the profile section, inserting the structural reinforcement web and making changes of direction in the neutral fiber, even allowing using the guiding element as a drawing jig, being able to later be removed rather than staying integrated in the profile section.

The invention also contemplates using any drive variant with respect to the relative movement between shaping rollers and the material to be shaped, which includes the rollers being static and the material to be shaped being mobile, or the rollers being mobile and the material to be shaped being static.

### Description of the Drawings

To complement the description being made and for the purpose of aiding to better understand the features of the invention according to a preferred practical embodiment thereof, a set of drawings is attached as an integral part of said description in which the following is depicted with an illustrative and non-limiting character:
Figure 1 shows a perspective view of a preferred embodiment of the profile section made from composite material proposed by the invention, in which a portion that is offset, i.e., a portion having a change of direction of the neutral fiber of the profile section, can be seen.
Figure 2 shows a perspective view of a detail of the profile section shown in Figure 1.
Figure 3 shows a schematic cross section of the profile section depicted in Figures 1 and 2, in which the continuity of the fibers of the FRP material of the basic profile section has been depicted.
Figure 4 shows a schematic perspective view of an embodiment of the equipment of the invention, during the shaping of a profile section, comprising a first roller station, a final roller station and a finishing roller station.
Figures 5 and 6 show different perspective views of the equipment depicted in Figure 4.
Figure 7 shows a schematic perspective view of an embodiment variant of the equipment, which additionally comprises two intermediate roller stations.
Figure 8 shows a schematic profile view of the equipment depicted in Figure 7.
Figure 9 shows a cross section of the first roller station, according to section line A-A of Figure 8, during the shaping of a profile section.
Figure 10 shows a cross section of an intermediate roller station according to section line B-B of Figure 8, during the shaping of a profile section.
Figure 11 shows a cross section of the finishing roller station according to section line C-C of Figure 8, during the shaping of a profile section.

### Preferred Embodiment of the Invention

In view of the discussed figures, it can be observed how in one of the possible embodiments of the invention the equipment for obtaining profile sections made from composite material proposed by the invention comprises a shaping station configured to continuously shape a basic profile section (1) that is initially planar on a rigid longitudinally non-straight guiding element (2) to obtain a final longitudinally non-straight profile section made from composite material according to the shape of the guiding element (2).

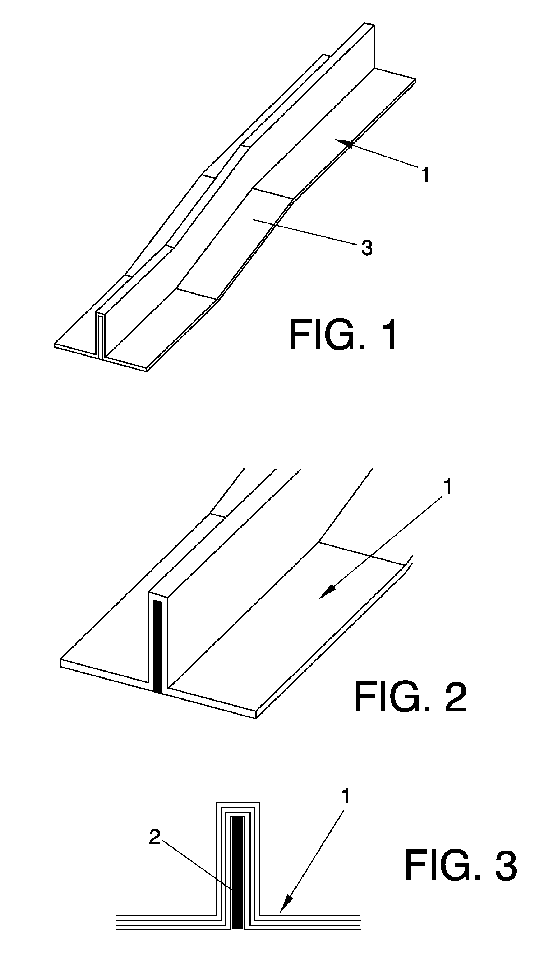

As can be seen in Figure 1, given that the guiding element (2) is not straight, the final profile section comprises a portion (3) that is offset throughout the profile section, which is achieved by means of the longitudinal and progressive insertion in the basic profile section (1) of the guiding element (2), as a consequence of the passage of said basic profile section (1) and said guiding element (2) through the shaping station.

The equipment comprises traction means configured so that the longitudinal advance movement of the basic profile section (1) is in solidarity with the longitudinal advance movement of the guiding element (2).

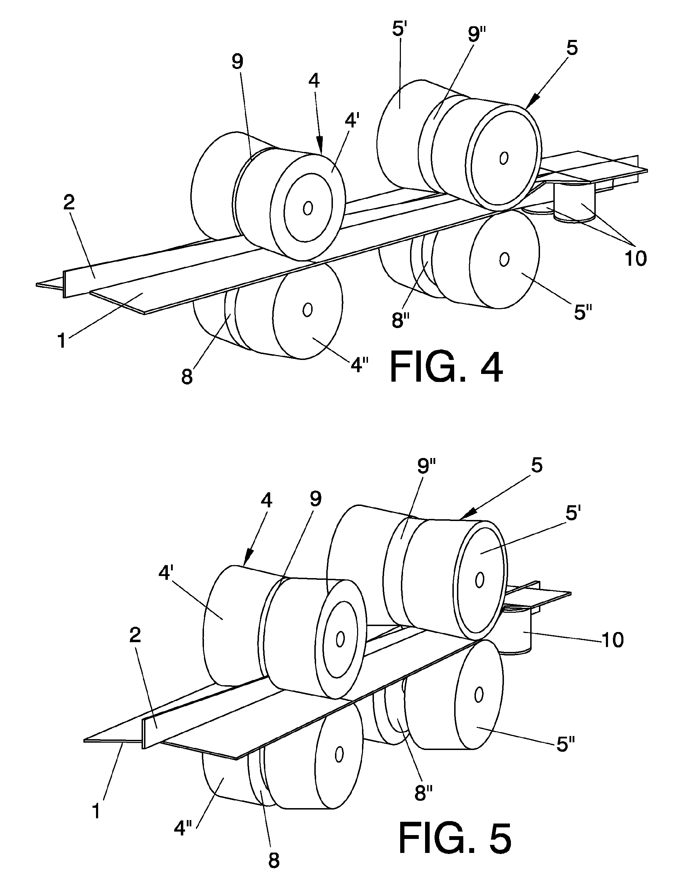

According to the embodiment depicted in Figures 4, 5 and 6, the shaping station comprises a first roller station (4), which consists of a first upper roller (4') and a first lower roller (4"), and a final roller station (5), consisting of a final upper roller (5') and a final lower roller (5").

The upper rollers (4', 5') have a notch (9, 9") configured to house in substantially vertical position the guiding element (2), said notch (9, 9") decreasing in depth from the first upper roller (4'), in which the lower rollers (4", 5") have a groove (8, 8") with increasing depth from the first lower roller (4").

The roller stations (4, 5) are configured to continuously shape the basic profile section (1) that is initially planar until obtaining the final profile section by longitudinally and progressively inserting in a longitudinal channel (7) of the basic profile section (1) the guiding element (2), as a consequence of the passage of said basic profile section (1) and said guiding element (2) through the notches (9, 9") and the grooves (8, 8").

During initial shaping, the first upper roller (4') pushes the guiding element (2) against the basic profile section (1), both penetrating in the first lower roller (4"), giving the profile section the previous shape for the next shaping, which allows making the profile progressively and without flaws.

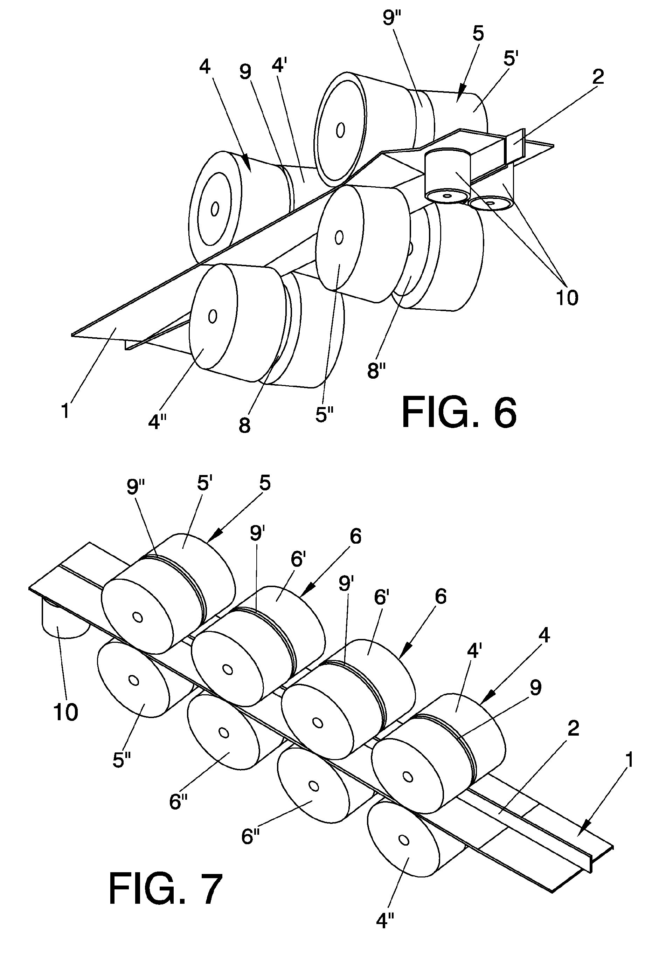

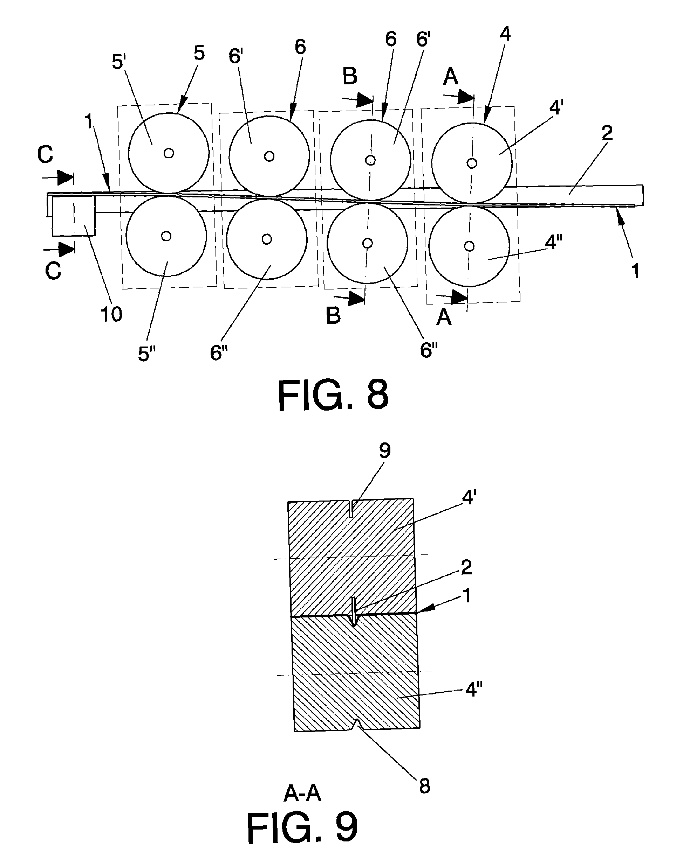

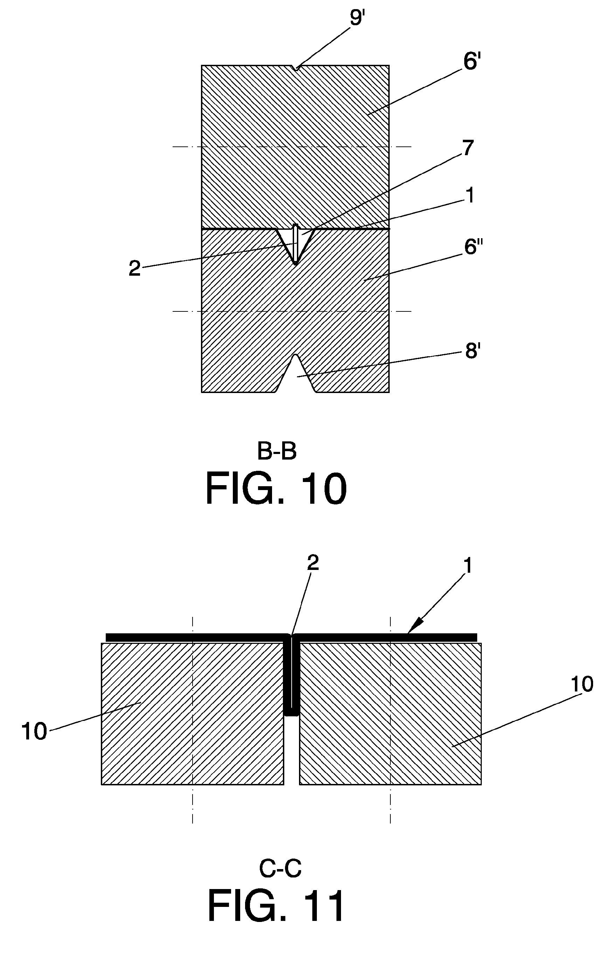

On the other hand, according to the embodiment depicted in Figures 7 to 11, the equipment additionally comprises two intermediate roller stations (6), each of which consists of an intermediate upper roller (6') and a intermediate lower roller (6"), located between the first roller station (4) and the final roller station (5), each intermediate upper roller (6') having an intermediate notch (9') with a depth less than the notch (9) of the first upper roller (4'), and each intermediate lower roller (6") having an intermediate groove (8') with a depth greater than the groove (8) of the first lower roller (4').

The roller stations (4, 5, 6) have a free-floating arrangement, being configured to shift vertically and laterally, in solidarity through the stations, and to produce the portions (3) that are offset throughout the final profile section.

On the other hand, the equipment comprises vibrating means configured to transmit a vibratory movement to the basic profile section (1) during shaping, such that it improves the adaptation between said basic profile section (1) and said guiding element (2) during shaping is complete.

The equipment also comprises a finishing roller station (10), located after the final roller station (5), said finishing roller station (10) being configured to press the basic profile section (1) against the guiding element (2), providing a finishing geometry to the final profile section.

In one of the possible embodiments, the method for obtaining profile sections made from composite material proposed by the invention comprises continuously shaping a basic profile section (1) that is initially planar on a rigid longitudinally non-straight guiding element (2) to obtain a final longitudinally non-straight profile section made from composite material, comprising a portion (3) that is offset by means of the longitudinal and progressive insertion in the basic profile section (1) of said guiding element (2) while it is being shaped.

The method comprises driving the basic profile section (1) and the guiding element (2), such that the longitudinal advance movement of the basic profile section (1) is in solidarity with the longitudinal advance movement of the guiding element (2). Using equipment such as that previously described is contemplated for carrying out the method of the invention.

The method also comprises transmitting a vibratory movement to the guiding element (2) during the shaping of the basic profile section (1) on said guiding element (2), such that the adaptation between said basic profile section (1) and said guiding element (2) during shaping is complete.

In one of the possible embodiments, the profile section made from composite material proposed by the invention comprises a basic profile section (1) which is shaped on a rigid non-straight guiding element (2), in which the basic profile section (1) is a composite material with a matrix selected from at least one thermoplastic material, at least one thermosetting material and any combination thereof, reinforced with fibers, i.e., it is made from FRP materials, whereas the guiding element (2) is made from the same material as the basic profile section (1).

In view of this description and set of drawings, the person skilled in the art could understand that the embodiments of the invention that have been described can be combined in a number of ways within the object of the invention. The invention has been described according to several preferred embodiments thereof, but for the person skilled in the art it will be obvious that a number of variations can be introduced in said preferred embodiments without exceeding the object of the claimed invention.

## Claims

1. Equipment for obtaining profile sections made from composite material, **characterized in that** it comprises at least one shaping station configured to at least partially continuously shape a basic profile section (1) that is initially planar on a rigid longitudinally non-straight guiding element (2) to obtain a final longitudinally non-straight profile section made from composite material, comprising at least one portion (3) that is offset by means of the longitudinal and progressive insertion in the basic profile section (1) of the guiding element (2), as a consequence of the passage of said basic profile section (1) and said guiding element (2) through said at least one shaping station.

2. Equipment for obtaining profile sections made from composite material according to claim 1, **characterized in that** it comprises traction means configured so that the longitudinal advance movement of the basic profile section (1) is in solidarity with the longitudinal advance movement of the guiding element (2).

3. Equipment for obtaining profile sections made from composite material according to any of the previous claims, **characterized in that** the shaping station comprises at least one first roller station (4), consisting of a first upper roller (4') and a first lower roller (4"), and a final roller station (5), consisting of a final upper roller (5') and a final lower roller (5"), wherein the upper rollers (4', 5') have a notch (9, 9") configured to house in substantially vertical position the guiding element (2), said notch (9, 9") decreasing in depth from the first upper roller (4'), wherein the lower rollers (4", 5") have a groove (8, 8") with increasing depth from the first lower roller (4"), said roller stations (4, 5) being configured to continuously shape the basic profile section (1) that is initially planar until obtaining the final profile section, by longitudinally and progressively inserting in a longitudinal channel (7) of the basic profile section (1) the guiding element (2), as a consequence of the passage of said basic profile section (1) and said guiding element (2) through the notches (9, 9") and the grooves (8, 8").

4. Equipment for obtaining profile sections made from composite material according to claim 3, **characterized in that** it comprises at least one intermediate roller station (6), consisting of an intermediate upper roller (6') and an intermediate lower roller (6"), located between the first roller station (4) and the final roller station (5), said at least one intermediate upper roller (6') having an intermediate notch (9') with a depth less than the notch (9) of the first upper roller (4'), and said at least one intermediate lower roller (6") having an intermediate groove (8') with a depth greater than the groove (8) of the first lower roller (4').

5. Equipment for obtaining profile sections made from composite material according to claim 2, **characterized in that** the roller stations (4, 5, 6) have a free-floating arrangement, being configured to shift vertically and laterally, in solidarity through the stations, and to produce the portions (3) that are offset throughout the final profile section.

6. Equipment for obtaining profile sections made from composite material according to any of the previous claims, **characterized in that** it comprises vibrating means configured to transmit a vibratory movement to the basic profile section (1) during shaping, such that it improves the adaptability thereof.

7. Equipment for obtaining profile sections made from composite material according to any of the previous claims, **characterized in that** it comprises a finishing roller station (10), located after the final roller station (5), said finishing roller station (10) being configured to press the basic profile section (1) against the guiding element (2), providing a finishing geometry to the final profile section.

8. Method for obtaining profile sections made from composite material, **characterized in that** it comprises at least partially continuously shaping a basic profile section (1) that is initially planar on a rigid longitudinally non-straight guiding element (2) to obtain a final longitudinally non-straight profile section made from composite material, comprising at least one portion (3) that is offset by means of the longitudinal and progressive insertion in the basic profile section (1) of said guiding element (2) while it is being shaped.

9. Method for obtaining profile sections made from composite material according to claim 8, **characterized in that** it comprises driving said basic profile section (1) and said guiding element (2) such that the longitudinal advance movement of the basic profile section (1) is in solidarity with the longitudinal advance movement of the guiding element (2).

10. Method for obtaining profile sections made from composite material according to any of claims 8 and 9, **characterized in that** it comprises using equipment according to any of claims 1 to 7.

11. Method for obtaining profile sections made from composite material according to any of claims 8 to 10, **characterized in that** it comprises extracting the guiding element (2) from the basic profile section (1) after said basic profile section (1) has been shaped on said guiding element (2), such that the final profile section has the geometry of the guiding element (2) once said guiding element (2) has been extracted.

12. Method for obtaining profile sections made from composite material according to any of claims 8 to 11, **characterized in that** it comprises transmitting a vibratory movement to the guiding element (2) during the shaping of the basic profile section (1) on said guiding element (2), such that the adaptation between said basic profile section (1) and said guiding element (2) during shaping is complete.

13. Profile section made from composite material, **characterized in that** it comprises a basic profile section (1) which is shaped on a rigid non-straight guiding element (2).

14. Profile section made from composite material according to claim 13, **characterized in that** the guiding element (2) is extracted from the final profile section, such that said final profile section has the geometry of the guiding element (2) without having said guiding element (2).

15. Profile section made from composite material according to any of claims 13 and 14, **characterized in that** the basic profile section (1) is made from a composite material with a matrix selected from at least one thermoplastic material, at least one thermosetting material and any combination thereof, reinforced with fibers.

16. Profile section made from composite material according to any of claims 13 to 15, **characterized in that** it is obtained by means of a method according to any of claims 8 to 12.
